# DEMANDE DE BREVET EUROPEEN

(11) **EP 0 888 864 A1**
(43) Date de publication de la demande: **07.01.1999**
(21) Numéro de dépôt: 98401623.8
(22) Date de dépôt: 30.06.1998
(51) Int. Cl.: B29C 49/54

(54) **Dispositif et procédé de fabrication d'un object en matière plastique**

(30) Priorité: 04.07.1997 FR 9708485
(71) Demandeur: GROSFILLEX S.A.R.L. Société à responsabilité limitée dite:, 01100 Oyonnax (FR)
(72) Inventeur: Jacquet, Gaston, 01590 Dortan (FR)
(74) Mandataire: Intes, Didier Gérard André

(57) **Abrégé**

Le dispositif comporte des moyens (10, 11) pour disposer une paraison (12) entre deux parties d'un moule de soufflage (14, 16). La paraison (12) vient coiffer la tête d'une canne de soufflage (32) disposée entre les deux parties de moule. En refermant le moule, on pince l'extrémité supérieure de la paraison en région supérieure du moule et l'on serre l'extrémité inférieure de la paraison contre la canne de soufflage (32). On réalise une étape de pré-soufflage de la paraison pour obtenir une enveloppe que l'on retourne en déplaçant vers le haut la canne de soufflage (32) avec un piston de retournement (34, 36), avant de réaliser une étape de soufflage final.

## Description

La présente invention concerne un procédé de fabrication d'un objet en matière plastique formant contenant, dans lequel on réalise une paraison en matière plastique, on introduit cette paraison dans un moule de soufflage ayant au moins deux parties susceptibles d'être déplacées l'une par rapport à l'autre pour ouvrir ou fermer le moule, on réalise une étape de soufflage dans ce moule et on réalise une étape de retournement en déplaçant un piston de retournement à l'intérieur du moule pour obtenir un objet formant contenant ayant un bord libre qui présente un retour.

Un procédé de ce type est connu dans le brevet français n°1 349 584. Selon ce document, on introduit la paraison par le haut du moule et on pince son extrémité inférieure avec les arêtes de pincement qui équipent l'extrémité supérieure du piston de retournement, de même que l'on pince l'extrémité supérieure de la paraison à l'aide d'arêtes de pincement qui équipent l'extrémité supérieure du moule. On introduit la canne de soufflage par l'extrémité supérieure du moule en perçant la paraison. En fait, l'extrémité inférieure de la paraison est coupée en même temps qu'elle est pincée par les arêtes de pincement du piston de retournement; l'étirement de la matière plastique dans la région de l'extrémité inférieure de la paraison est très important. Dans la mesure où, par la suite, le retournement s'effectue à partir de cette extrémité inférieure, l'étirement créé par le pincement est la cause d'une fragilité importante qui peut conduire à un déchirement de la paraison lors du retournement. En réalité, le procédé que divulgue ce document n'est utilisable que pour des produits de petites dimensions, pour lesquelles la course du piston de retournement est suffisamment peu importante pour éviter d'être la cause d'un déchirement de la paraison. En outre, l'épaisseur de la paraison est relativement importante par rapport aux dimensions de l'objet qu'on fabrique.

La demande européenne 0 704 379 divulgue un procédé de fabrication de fûts en plastique soufflé, selon lequel la paraison est introduite entre les deux parties de moule ouvertes et disposée sur une canne de soufflage. Les deux parties du piston de retournement sont serrées contre cette canne lors de la fermeture des deux parties du moule, de sorte que la paraison est pincée.

Dans cette situation, on réalise un premier soufflage jusqu'à dilater complètement la paraison en lui donnant la forme de la cavité du moule, c'est-à-dire en la plaquant contre la paroi de la cavité, en particulier dans la région annulaire autour du piston (un temps d'arrêt d'environ 2 secondes est observé).

On réalise ensuite un second soufflage durant lequel on fait remonter le piston de retournement sur une faible distance, de l'ordre de 6,5 cm (2,65 pouces).

On réalise enfin un troisième et dernier soufflage.

Les fûts formés de cette manière ont des parois très épaisses. De plus, le déplacement du piston de retournement sert à former une bague externe pleine, extrêmement résistante.

Ce procédé n'est pas utilisable pour la fabrication d'objets formant contenants de consommation courante, par exemple des pots destinés à contenir des plantes.

En effet, le prix de revient de ces objets doit être faible, ce qui impose d'utiliser relativement peu de matière plastique. En d'autres termes, la paroi de la paraison est comparativement nettement plus mince que dans la demande européenne 0 704 379.

De plus, pour ces objets courants, la partie de la paraison retournée par le piston sert à former un retour qui donne de la main et procure une sensation d'épaisseur apparente. Ce retour doit avoir une longueur suffisante à cet effet.

Pour effectivement conférer cette sensation d'épaisseur, le retour ne doit pas être plein, ni écrasé sur lui-même comme dans la demande européenne 0 704 379.

Si l'on cherchait à utiliser le procédé de la demande européenne 0704379 pour des objets formant contenants à parois minces (ayant par exemple une épaisseur courante de l'ordre de 2 mm), avec un retour long, on aboutirait à un déchirement de la paraison dans la région de ce retour.

L'invention vise à remédier aux inconvénients précités en proposant un procédé amélioré, pour lequel on évite tout risque de déchirement de la paraison, en particulier lors de l'étape de retournement.

Ce but est atteint grâce au fait que l'on introduit la paraison dans le moule ouvert en posant l'extrémité inférieure de ladite paraison sur la tête d'une canne de soufflage située entre les deux parties de moule écartées l'une de l'autre, au fait que l'on rapproche les deux parties du moule pour au moins sensiblement fermer ce moule, on pince la paraison dans la région supérieure du moule et on serre l'extrémité inférieure de ladite paraison contre la canne de soufflage dans la région inférieure du moule, au fait que, dans cette situation, on réalise une étape de pré-soufflage pour obtenir une enveloppe pré-soufflée dont une partie de la périphérie se trouve au voisinage des parois du moule sans être plaquée contre ces parois, ladite enveloppe pré-soufflée ayant une partie d'extrémité inférieure qui se trouve au voisinage de l'extrémité supérieure du piston de retournement tout en étant distante des parois du moule, au fait que l'on réalise l'étape de retournement en déplaçant vers le haut la canne de soufflage avec le piston pour retourner sur elle-même la partie d'extrémité inférieure de l'enveloppe pré-soufflée, et au fait que, à la suite de l'étape de retournement, on réalise une étape de soufflage final pour obtenir une enveloppe soufflée ayant la forme de l'objet formant contenant.

On comprend que, dans la mesure où l'extrémité inférieure de la paraison est posée sur la tête de la canne de soufflage, la dimension intérieure de la paraison lorsqu'elle est introduite dans le moule est adaptée au contour de la canne de soufflage. Contrairement à ce que divulgue le brevet français n°1 349 584, on ne pince pas la paraison en la refermant sur elle-même, de sorte que l'on ne diminue pas brutalement ses dimensions extérieures. De plus, la paraison n'est pas pincée mais est seulement serrée contre la canne de soufflage. Ce faisant, on évite d'écraser la matière plastique qui constitue la paraison de sorte que, pour cette raison également, on ne crée pas de zone d'étirement important. Dans la demande européenne 0704379, il n'est fait état d'aucune précaution pour éviter un écrasement de la paraison contre la canne de soufflage.

Selon l'invention, on serre la paraison sur la canne de soufflage, juste assez pour obtenir une étanchéité suffisante pour réaliser l'étape de soufflage de la paraison à l'intérieur du moule.

De plus, on réalise l'étape de retournement alors que l'enveloppe est seulement à l'état pré-soufflé, c'est-à-dire qu'elle n'a pas encore totalement épousé la cavité du moule. Il en résulte, d'une part, que la matière plastique qui constitue l'enveloppe ne risque pas de se refroidir du fait d'un contact trop important avec les parois du moule, de sorte qu'elle est plus "malléable" pour le retournement. Il en résulte également qu'on commence à effectuer le retournement alors que la paroi de l'enveloppe n'a pas atteint l'épaisseur minimale qu'elle aurait atteinte si, comme dans le brevet français n° 1 349 584 ou comme dans la demande européenne 0 704 379, on l'avait appliquée contre la paroi de la cavité en la contraignant à occuper le volume maximal de la cavité.

Avantageusement, pendant l'étape de pré-soufflage, on laisse le moule dans un état non verrouillé, un interstice d'échappement étant ménagé entre les parties de moule.

Il est également avantageux de raccorder l'espace intérieur de l'enveloppe à un conduit d'échappement d'air pendant l'étape de retournement, pour éviter que l'enveloppe ne se plaque trop rapidement contre les parois du moule, en particulier dans la région dans laquelle se déplace le piston. Le raccordement à un conduit d'échappement d'air (géré par un processeur ou se faisant par l'intermédiaire d'une soupape calibrée) permet d'éviter qu'une pression prédéterminée ne soit dépassée dans l'enveloppe malgré la diminution de volume due au déplacement du piston.

De manière avantageuse, on utilise un piston de retournement ayant deux parties disposées autour de la canne de soufflage et déplaçables l'une par rapport à l'autre. Ainsi, lors de l'introduction de la paraison dans le moule, on maintient les deux parties du piston écartées en ménageant ainsi un espace sensiblement annulaire entre la canne et lesdites parties du piston et l'on pose l'extrémité inférieure de la paraison sur la tête de la canne de soufflage en insérant ladite extrémité inférieure dans ledit espace. Ensuite, on rapproche les deux parties du piston pour les appliquer contre la canne de soufflage et serrer ainsi l'extrémité inférieure de la paraison contre ladite canne.

Grâce à ces dispositions, l'extrémité inférieure de la paraison qui est serrée pour assurer l'étanchéité lors du soufflage est disposée dans l'espace annulaire entre les deux parties du piston et la canne de soufflage. Lors de l'étape de retournement, cette extrémité inférieure reste évidemment maintenue entre les deux parties du piston et cette canne et n'est pas directement sollicitée par le déplacement vertical du piston puisque la canne de soufflage et le piston se déplacent ensemble. Par conséquent, même si le serrage est un peu trop fort et occasionne un début d'écrasement de la matière plastique, cet écrasement, même s'il affaiblit localement la matière plastique constituant la paraison, ne peut causer aucun déchirement de l'enveloppe.

Selon une autre variante avantageuse, on utilise un piston de retournement comprenant une partie de piston ayant la forme d'un cylindre évidé, la canne de soufflage étant disposée dans l'évidement de ladite partie et au moins l'un des deux éléments constitués par la tête de la canne de soufflage et par ledit évidement présentant des dimensions diamétrales allant en diminuant vers le haut. Lors de l'introduction de la paraison dans le moule, on maintient la canne de soufflage dans une position basse dans laquelle un espace sensiblement annulaire est ménagé entre la tête de ladite canne et la paroi dudit évidement et l'on pose l'extrémité inférieure de la paraison sur la tête de la canne de soufflage en insérant ladite extrémité inférieure dans ledit espace. Ensuite, on remonte la canne de soufflage dans l'évidement de la partie de piston pour serrer l'extrémité inférieure de la paraison entre la paroi de l'évidement et la tête de la canne.

L'invention concerne également un dispositif pour fabriquer un objet en matière plastique formant contenant, dispositif qui comporte des moyens pour réaliser une paraison en matière plastique, un moule de soufflage ayant au moins deux parties susceptibles d'être déplacées l'une par rapport à l'autre pour ouvrir ou fermer le moule, des moyens pour introduire la paraison dans le moule, une canne de soufflage et un piston de retournement susceptible d'être déplacé à l'intérieur du moule pour former un retour dans la région du bord libre de l'objet formant contenant.

Le brevet français n°1 349 584 montre un dispositif dont l'extrémité supérieure du piston de retournement est équipée d'arêtes de pincement qui pincent entre elles la paraison sur elle-même. On a indiqué précédemment que ce pincement et la découpe de la paraison qui en résulte sont la cause d'une fragilité accrue de la paraison, précisément dans la zone qui est par la suite soumise aux contraintes d'étirement les plus importantes puisque c'est celle dans laquelle on effectue le retournement.

Le dispositif présenté dans la demande européenne 0 704 379 sert à réaliser un soufflage en trois étapes pour fabriquer des fûts. Dès la première étape, la paraison est complètement plaquée contre les parois du moule. Un tel dispositif n'est pas utilisable pour fabriquer des objets formant contenants à parois minces et ayant un retour long.

L'invention vise à proposer un dispositif amélioré qui permet d'éviter les inconvénients précités.

Ce but est atteint grâce au fait que la canne de soufflage est disposée sous les moyens pour introduire la paraison dans le moule et se trouve entre les deux parties du moule, la canne de soufflage présentant une tête de soufflage apte à recevoir l'extrémité inférieure de la paraison lorsque le moule est ouvert, au fait que dispositif comporte des moyens pour pincer la paraison dans la région supérieure du moule et pour serrer l'extrémité inférieure de ladite paraison contre la canne de soufflage dans la région inférieure du moule, au fait que la canne de soufflage est susceptible d'être utilisée pour réaliser une étape de pré-soufflage de manière à obtenir une enveloppe pré-soufflée dont une partie de la périphérie se trouve au voisinage des parois du moule au moins sensiblement fermé sans être plaquée contre ces parois, ladite enveloppe pré-soufflée ayant une partie d'extrémité inférieure qui se trouve au voisinage de l'extrémité supérieure du piston de retournement tout en étant distante des parois du moule, au fait que la canne de soufflage est susceptible d'être déplacée vers le haut avec le piston pour retourner sur elle-même la partie d'extrémité inférieure de l'enveloppe pré-soufflée et au fait que la canne de soufflage est susceptible d'être utilisée pour réaliser une étape de soufflage final de manière à obtenir une enveloppe soufflée ayant la forme de l'objet formant contenant.

On comprend que, grâce à ces dispositions, l'extrémité inférieure de la paraison est posée sur la tête de la canne de soufflage. La paraison est en général obtenue par extrusion, directement au-dessus du moule, et présente une forme tubulaire. Ainsi, l'extrémité inférieure de la paraison vient coiffer la tête de la canne de soufflage, c'est-à-dire que cette tête se trouve engagée à l'intérieur de la paraison. Il en résulte que l'on peut simplement serrer la paraison contre la canne de soufflage à l'aide des moyens prévus à cet effet pour obtenir dans la paraison l'étanchéité suffisante en vue du soufflage. Il n'est pas nécessaire de pincer l'extrémité inférieure de la paraison sur elle-même, ce qui, dans l'art antérieur, est la cause d'un écrasement et d'un étirement trop importants, risques de fragilité. De plus, le fait que la canne puisse être utilisée pour réaliser l'étape de pré-soufflage avant le retournement permet d'effectuer le retournement à un stade dans lequel l'enveloppe est seulement pré-soufflée et donc plus facile à déformer sans risque de déchirement.

La canne de soufflage est raccordée à une source d'air sous pression que l'on active pour réaliser l'étape de pré-soufflage et l'étape de soufflage. Les déplacements des différents éléments du dispositif sont gérés de telle sorte que le déplacement du piston en vue du retournement ne commence que lorsque l'enveloppe a atteint son état pré-soufflé.

De préférence, pour compenser la diminution du volume de l'espace intérieur de l'enveloppe lors du retournement, on raccorde ledit espace intérieur à des moyens de décompression pendant la montée du piston, ce qui revient à réaliser une étape de décompression en même temps que l'étape de retournement. A l'issue de l'étape de retournement, alors que le moule est complètement verrouillé, on réalise l'étape de soufflage final.

Selon une variante avantageuse, le piston de retournement comporte deux parties disposées autour de la canne de soufflage, ces deux parties étant susceptibles d'être écartées pour ménager autour de la canne de soufflage un espace sensiblement annulaire apte à recevoir l'extrémité inférieure de la paraison lorsque celle-ci est posée sur la tête de la canne de soufflage et d'être rapprochées pour serrer l'extrémité inférieure de la paraison contre ladite canne.

Dans ce cas, avantageusement, les deux parties du piston de retournement comportent chacune un organe de serrage, ces organes de serrage formant, considérés ensemble, une couronne de serrage qui fait saillie vers la canne de soufflage pour serrer l'extrémité inférieure de la paraison contre ladite canne.

Selon une autre variante avantageuse, le piston de retournement comporte une partie de piston ayant la forme d'un cylindre évidé, la canne de soufflage étant disposée dans l'évidement de ladite partie et au moins l'un des deux éléments constitués par la tête de la canne de soufflage et par ledit évidement présentant des dimensions diamétrales allant en diminuant vers le haut. La canne de soufflage est susceptible d'occuper une position basse dans laquelle un espace annulaire apte à recevoir l'extrémité inférieure de la paraison lorsque celle-ci est posée sur la tête de la canne de soufflage est ménagé entre ladite tête et la paroi de l'évidement de la partie de piston, et d'occuper une position haute dans le dit évidement pour serrer l'extrémité inférieure de la paraison entre la paroi de cet évidement et ladite tête de la canne.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue générale schématique d'un dispositif conforme à l'invention,
- la figure 2 est une section verticale de la partie centrale de ce dispositif, montrant une première étape du procédé de l'invention,
- les figures 3 à 6 sont des vues analogues à la figure 2, certains éléments étant toutefois représentés en vue extérieure, illustrant les étapes successives de ce procédé, et
- les figures 7 et 8 sont des vues analogues aux figures 2 et 6 montrant une variante du dispositif de l'invention, respectivement dans une étape initiale et dans une étape finale du procédé.

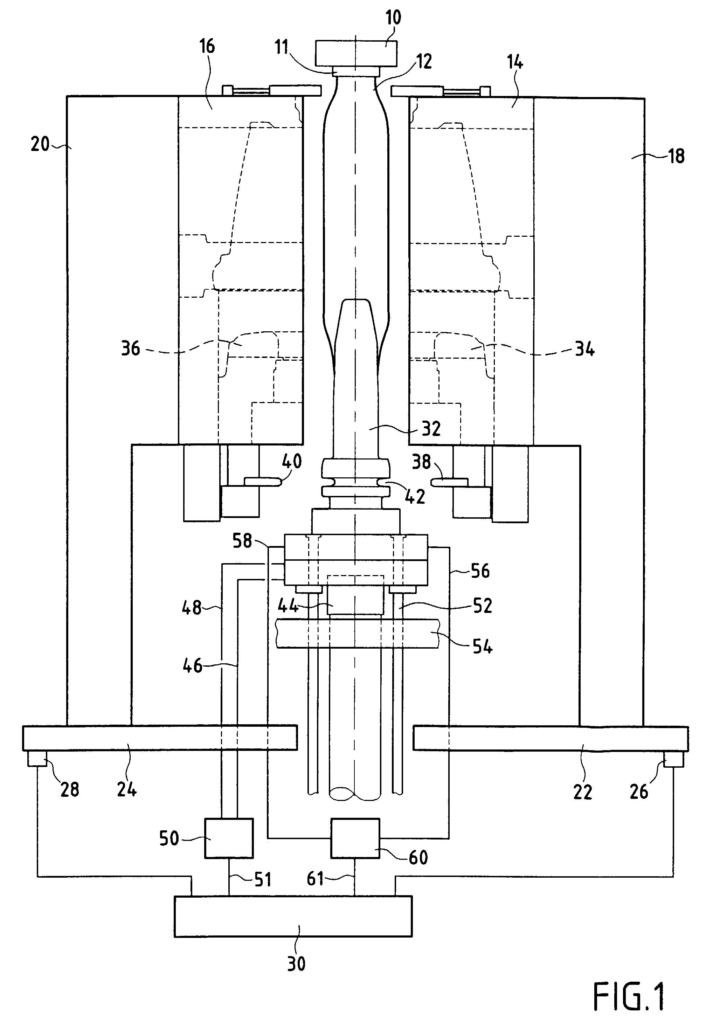

Le dispositif de la figure 1 comporte une extrudeuse 10 permettant de réaliser une paraison tubulaire 12 en matière plastique. Il comporte également un moule de soufflage qui a deux parties 14 et 16. Elles sont respectivement montées sur les deux parties 18 et 20 d'un bâti elles-mêmes disposées sur des glissières horizontales 22 et 24. Des moyens 26 et 28 d'entraînement des deux parties de bâti 18 et 20 en translation horizontale sur les glissières 22 et 24 sont prévus. Ils peuvent par exemple être constitués par des vérins ou par des moteurs. Ils sont actionnés, par exemple à l'aide de moyens de commande gérés par un microprocesseur 30, pour rapprocher ou éloigner les deux parties de bâti, et donc les deux parties 14 et 16 du moule, au cours des différentes étapes du procédé mettant en oeuvre ce dispositif. Comme on le verra dans la suite, ces moyens sont avantageusement réglés pour ne verrouiller les deux parties de moule qu'à la fin de l'étape de pré-soufflage.

Ce dernier comporte encore une canne de soufflage 32 qui, une fois la paraison 12 introduite dans le moule et les deux parties 14 et 16 au moins sensiblement fermées l'une sur l'autre, permet de souffler cette paraison pour lui donner la forme d'une enveloppe et pour, finalement, obtenir un objet en matière plastique soufflé.

Le dispositif comporte encore un piston de retournement qui, sur les figures, comprend deux parties, respectivement 34 et 36. Ce piston est déplaçable vers le haut à l'intérieur du moule pour retourner l'extrémité inférieure de l'enveloppe formée à partir de la paraison. Les deux parties de piston 34 et 36, ainsi que la canne de soufflage 32, sont solidaires en déplacement vertical lors de ce mouvement de retournement. A cet effet, les deux parties de piston comportent des premiers moyens de verrouillage, respectivement 38 et 40, susceptibles, lorsque le moule est au moins sensiblement refermé, de coopérer avec les deuxièmes moyens de verrouillage 42 qui équipent la canne de soufflage.

Par exemple, les premiers moyens de verrouillage comportent des doigts saillants 38 et 40 qui viennent s'engager dans les deuxièmes moyens de verrouillage constitués par une gorge 42. La périphérie de la canne de soufflage ayant en général une forme cylindrique, cette gorge peut être annulaire, auquel cas les doigts 38 et 40 peuvent avoir une extrémité conformée en arc de cercle s'étendant par exemple sur environ un quart de cercle. Les doigts 38 et 40 et la gorge 42 étant situés dans un même plan horizontal lorsque la canne 32 et les deux parties de piston 34 et 36 sont en position basse, les doigts viennent naturellement s'enclencher dans la gorge 42 lorsque l'on rapproche les deux moitiés de moule. Les deux parties de piston sont alors rendues solidaires en déplacement vertical avec la canne de soufflage, de sorte qu'il suffit que ce soit cette dernière qui soit montée sur des moyens de déplacement vertical pour entraîner l'ensemble constitué par cette canne et les deux parties de piston. De manière alternative, on pourrait prévoir que chacune des deux moitiés de piston soit montée sur des moyens de déplacement vertical, tandis que la canne suivrait les déplacements verticaux des deux parties de piston une fois les moyens de verrouillage enclenchés.

Sur la figure 1, la canne de soufflage est montée sur un vérin hydraulique 44 auquel sont reliés des conduits d'alimentation d'huile 46 et d'échappement d'huile 48, eux-mêmes raccordés à un circuit hydraulique 50. Les tiges de guidage 52 coulissant dans un support 54 peuvent être prévues pour guider le déplacement vertical de la canne de soufflage qui entraîne avec elle les deux parties de piston.

La canne de soufflage est également raccordée à des conduits 56 et 58 raccordés à un circuit d'alimentation en air sous pression 60.

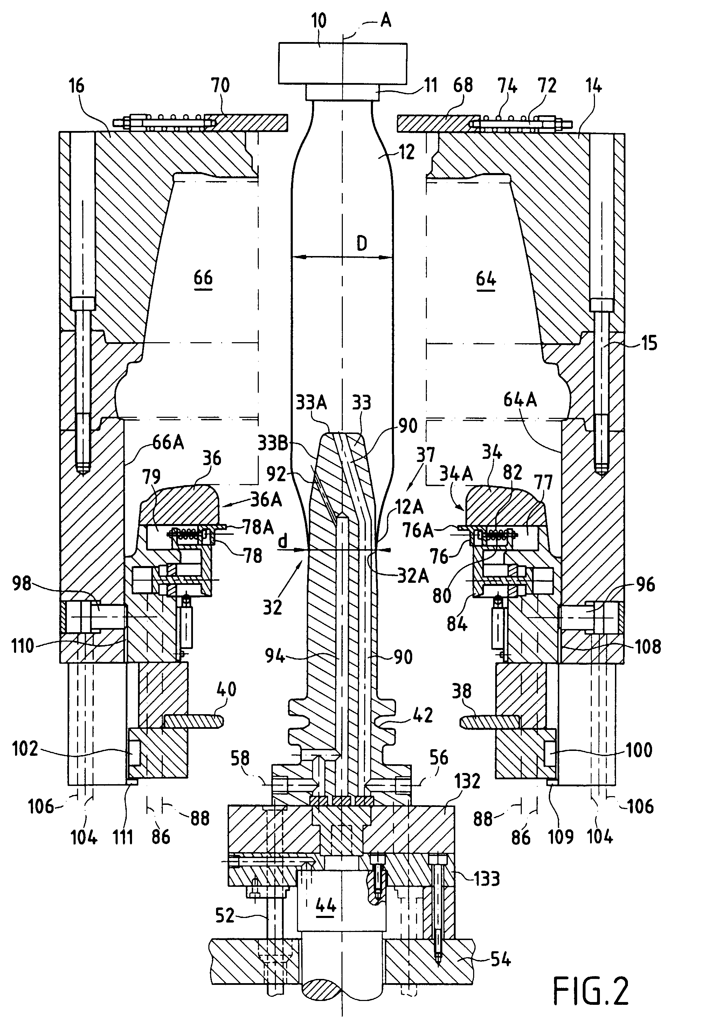

La circulation de l'air ou de l'huile dans les différents conduits peut être gérée par des électrovannes ou analogues, elles-mêmes commandées par le microprocesseur 30. Pour schématiser cette possibilité, on a simplement raccordé le circuit d'huile 50 et le circuit d'air 60 au microprocesseur 30 par des fils de commandes électriques, respectivement 51 et 61. Ce microprocesseur gère ainsi l'enchaînement des différentes étapes du procédé qui sont illustrées par les figures 2 à 6.

On décrit tout d'abord la figure 2 qui est plus détaillée que les suivantes. On remarque que la canne de soufflage 32 est située sous la buse d'extrusion 11 et alignée verticalement avec cette dernière. Ainsi, lorsque les deux moitiés de moule 14 et 16 sont écartées comme le montre la figure 2, la paraison 12 sortant de la buse d'extrusion 11 vient naturellement coiffer la tête 33 de la canne de soufflage 32, jusqu'à ce que son extrémité inférieure 12A vienne se positionner contre la paroi latérale 32A de la canne de soufflage 32. Il faut noter que la paraison a une forme sensiblement tubulaire, son diamètre intérieur courant D étant légèrement supérieur au diamètre courant d de la paroi 32A de la canne de soufflage.

Il faut noter que sur les figures, la buse d'extrusion est directement placée au-dessus du moule. Par conséquent, les moyens pour introduire la paraison dans le moule sont directement constitués par cette buse en elle-même. Dans d'autres situations, on pourrait prévoir un organe supplémentaire d'acheminement de la paraison l'essentiel étant que la canne de soufflage se trouve verticalement sous les moyens d'introduction de la paraison dans le moule. La canne de soufflage 32 est placée entre les deux parties de moule 14 et 16 et, contrairement à ces dernières, elle reste fixe lorsque les deux parties de bâti 18 et 20 sont déplacés en translation sur les glissières 22 et 24. Pour introduire la paraison, les deux parties de moule sont évidemment suffisamment écartées pour que la paraison passe entre elles, dans l'espace annulaire 37, sans les toucher.

Les deux parties de moule peuvent comporter un assemblage de pièces empilées les unes sur les autres et fixées par des vis 15 ou analogues. Ces pièces sont usinées de telle sorte que les deux parties de moule 14 et 16 présentent des évidements, respectivement 64 et 66 qui, lorsque le moule est fermé, forment ensemble la cavité de ce moule. En partie supérieure, les évidements 64 et 66 présentent une forme qui détermine la forme extérieure de l'objet que l'on souhaite fabriquer. Par exemple, il peut s'agir d'un pot à plantes, de forme générale tronconique. En partie inférieure, les évidements 64 et 66 comportent des tronçons, respectivement 64A et 66A qui ont la forme de demi-cylindres dont les parois sont verticales. Ces tronçons demi-cylindriques 64A et 66A jouent le rôle de guides à l'intérieur desquels coulissent les deux parties de piston 34 et 36 qui ont chacune la forme d'un demi-cylindre évidé, l'évidement délimitant une paroi dite "interne", respectivement 34A et 36A, qui est tournée vers la paroi 32A de la canne de soufflage.

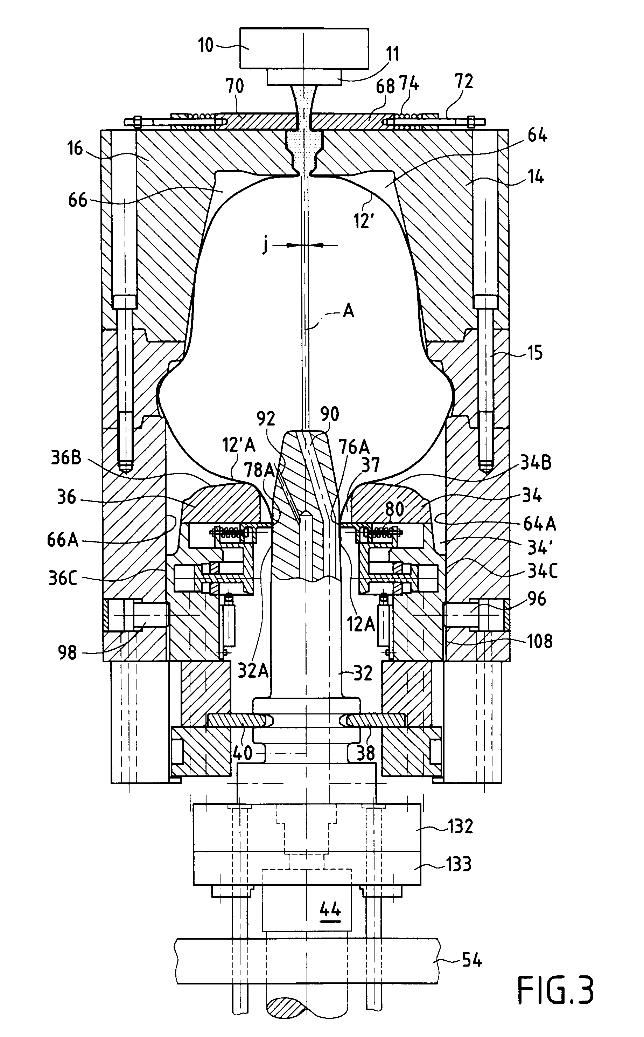

La figure 2 montre la fin de première étape du procédé, au cours de laquelle la paraison est introduite sur la tête de la canne de soufflage, entre les deux parties 14 et 16 de moule écartées. Les deux parties de piston 34 et 36 sont alors écartées de la canne de soufflage, de sorte que l'extrémité 12A de la paraison est naturellement introduite dans l'espace annulaire 37 formé entre les parois 34A et 36A et la paroi 32A. La figure 3 montre une étape ultérieure, dans laquelle les deux parties de moule ont été rapprochées l'une de l'autre pour "fermer" la paraison et dans laquelle, en outre, une étape de pré-soufflage a été réalisée.

Pour ce qui est de la fermeture de la paraison, les deux parties 14 et 16 de moule comportent des moyens pour pincer la paraison dans la région supérieure du moule. Plus précisément, l'extrémité supérieure des parties 14 et 16 est équipée de doigts de pincement, respectivement 68 et 70 qui, lorsque les deux parties de moule sont rapprochés l'une de l'autre pour obtenir la configuration de la figure 3, viennent pincer la paraison sur elle-même entre leurs extrémités libres respectives. En comparant les figures 2 et 3, on voit que les doigts de pincement sont initialement fortement en saillie, à partir des deux partie de moule, vers l'axe central A de la canne de soufflage. Ils sont montés sur des moyens de support élastiques comprenant, pour chaque doigt, une tige de support 72 et un ressort 74, pour être à même de venir correctement pincer la paraison en plaçant leurs extrémités libres respectives sensiblement dans le plan de joint du moule.

Pour ce qui est de la fermeture dans la région inférieure de la paraison, chaque partie de piston 34 et 36 est pourvue d'un organe de serrage, respectivement 76 et 78, dont l'extrémité libre respectivement 76A et 78A fait saillie sur la face interne, respectivement 34A et 36A. Comme on le voit sur la figure 3, lorsque le moule est sensiblement refermé, les extrémités libres 76A et 78A des organes de serrage forment ensemble une couronne de serrage qui vient serrer l'extrémité inférieure 12A de la paraison contre la paroi cylindrique 32A de la canne de soufflage 32. Comme les doigts de pincement 68 et 70, les organes de serrage 76 et 78 sont montés sur des moyens de coulissement élastiques, dont on comprendra mieux l'intérêt dans la suite, qui comprennent des tiges coulissantes 80 et des ressorts de rappel 82, les ressorts les sollicitant dans la position de saillie maximale par rapport à la face interne de la partie de piston sur laquelle ils sont montés, mais leur permettant de venir légèrement rentrer dans la partie de piston 34 ou 36 pour réaliser le serrage convenable en fonction du rapprochement des parties de piston et de la canne de soufflage. De plus, ces moyens de support élastiques sont eux-mêmes solidaires du déplacement radial de pistons 84 disposés dans des évidements radiaux pratiqués dans les parties 34 et 36 du piston de retournement. Dans ces évidements, sont réalisées des chambres raccordées à des conduits 86 et 88 véhiculant du fluide sous pression, par exemple de l'air. Sur les figures 2 et 3, ces pistons 84 sont représentés dans leur position d'avancement maximale vers la paroi 34A ou 36A, position dans laquelle ils permettent effectivement que les organes de serrage 76 et 78 se trouvent en saillie sur les faces 34A et 36A. Pour ce faire, les conduits 86 sont alimentés en air sous pression, tandis que les conduits 88 permettent l'échappement d'air. A la fin du procédé, pour des raisons que l'on expliquera dans la suite, les pistons 84 peuvent être ramenés de manière à s'éloigner de l'axe A en alimentant les conduits 88 en air sous pression, de manière à rentrer les organes de serrage 76 et 78 dans leurs logements respectifs 77 et 79.

Pour passer de la situation que montre la figure 2 à celle que montre la figure 3, il suffit de déplacer l'une vers l'autre les deux parties de moule 14 et 16 jusqu'à venir pincer l'extrémité supérieure de la paraison entre les doigts 68 et 70 et serrer l'extrémité inférieure de la paraison contre la canne de soufflage à l'aide des organes de serrage 76 et 78 puis, une fois la paraison fermée de cette manière, de réaliser une étape de pré-soufflage en injectant de l'air à l'intérieur de la paraison par la canne de soufflage, ce qui confère à la paraison la forme d'une enveloppe pré-soufflée que montre la figure 3.

La canne de soufflage 32 comporte en effet un conduit de soufflage d'air 90 qui débouche à l'extrémité supérieure 33A de sa tête 33 et qui, à la base de cette canne, est raccordé au conduit d'alimentation d'air 56. Le jet d'air soufflé par le conduit 90 est dirigé vers le haut pratiquement verticalement. La canne de soufflage comporte également un ou plusieurs conduits secondaires 92 (avantageusement trois ou quatre) qui débouchent sur le côté de sa tête, dans une portion tronconique 33B de cette dernière. Les conduits 92 prennent dans un perçage 94 de la canne de soufflage lui-même raccordé, à la base de cette canne, au conduit d'alimentation d'air 58. L'alimentation des conduits 56 et 58 de même que, éventuellement, l'échappement d'air par ces conduits, est gérée par le circuit 60 qui comprend une source d'air comprimé et, éventuellement, des électrovannes ou des soupapes d'échappement dont le fonctionnement peut être commandé par le microprocesseur 30 à l'aide de la ligne de commande 61.

Une fois les deux parties de moule 14 et 16 sensiblement refermées l'une sur l'autre comme le montre la figure 3, on injecte donc de l'air comprimé par le conduit 90 de manière à réaliser une étape de pré-soufflage à l'issue de laquelle la paraison 12 est conformée en enveloppe pré-soufflée 12'.

Comme on le voit sur la figure 3, au moins une partie de la périphérie de cette enveloppe se trouve au voisinage des parois du moule (les parois des cavités 64 et 66) mais n'est pas plaquée contre ces parois, tout au moins sur toute leur longueur. De plus, l'extrémité inférieure 12'A de l'enveloppe se trouve au voisinage de l'extrémité supérieure du piston de retournement. Toutefois, la partie d'extrémité inférieure 12'A n'est pas introduite dans l'espace annulaire 34' ménagé entre le piston 34, 36 et les parois cylindriques 64A et 66A du moule. Par exemple, cette extrémité inférieure 12'A repose sur une petite partie des extrémités supérieures 34B et 36B des deux parties de piston 34 et 36. On remarque que la forme de l'extrémité inférieure 12A de la paraison n'a pas été modifiée et que cette dernière est restée serrée contre la canne de soufflage 32.

L'enveloppe pré-soufflée présente ainsi sensiblement la forme d'une poire et, à l'issue de l'étape de pré-soufflage, la pression régnant à l'intérieur de cette enveloppe est de l'ordre de 1 à 4 bar (par exemple 2,2 bar pour des paraisons d'épaisseur moyenne, de l'ordre de 5 à 6 mm). Pour éviter d'aller au-delà du stade de pré-soufflage et de plaquer l'enveloppe contre les parois du moule, le débit de l'air alimentant le conduit 90 lors de l'étape de pré-soufflage est avantageusement limitée par un réducteur de débit.

On remarque encore sur la figure 3 qu'un jeu j est préservé entre les deux parties 14 et 16 de moule dans le plan de joint. En fait, pendant toute l'étape de pré-soufflage, on laisse le moule dans un état non verrouillé en préservant un interstice d'échappement d'air entre les deux parties de moule. Dans l'exemple représenté, cet interstice est ménagé du fait de l'existence du jeu j. Il constitue un moyen simple de permettre l'échappement, hors de la cavité du moule, de l'air repoussé par l'enveloppe 12' lors de son pré-gonflage. Le jeu j est faible, avantageusement de l'ordre de 1 à 2 mm, pour éviter que la paraison n'ait tendance à venir se "coincer" entre les deux parties de moule lors du pré-soufflage. Tout simplement, pour obtenir le jeu j, on laisse les deux parties de moule venir l'une contre l'autre sans le verrouiller.

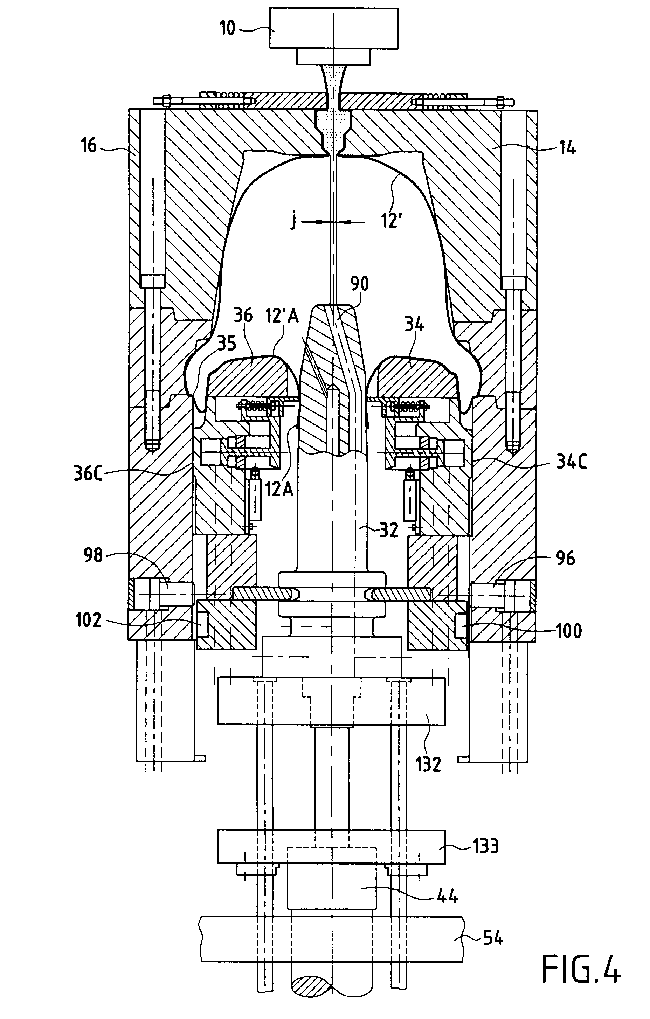

Une fois l'étape de pré-soufflage terminée, on réalise une étape de retournement illustrée par la figure 4, qui montre le piston dans une position intermédiaire où le retournement n'est pas terminé. Tout d'abord, dans la position de la figure 3, les deux parties de piston 34 et 36 sont venues se verrouiller sur la canne de soufflage, les doigts 38 et 40 s'étant mis en place dans la gorge 42. Pour réaliser l'étape de retournement, il suffit d'actionner le vérin 44 qui porte la canne de soufflage pour déplacer celle-ci vers le haut, à l'occasion de quoi elle porte avec elle vers le haut les deux parties de piston 34 et 36. Ainsi, la canne de soufflage forme, lors de l'étape de retournement, un noyau central du piston de retournement, qui est en fait constitué de trois parties : la canne de soufflage 32 et les deux parties 34 et 36. Lorsque ce piston monte dans la cavité du moule, les extrémités supérieures 34B et 36B des deux parties 34 et 36 de piston portent l'extrémité inférieure 12'A de l'enveloppe pré-soufflée qui adopte peu à peu la forme d'une collerette venant se placer à l'intérieur de l'enveloppe 12'.

Le jeu j évoqué précédemment présente un intérêt particulier lors de l'étape de retournement. En effet, le moule est réalisé de telle sorte que les périphéries externes 34C et 36C des deux parties 34 et 36 de piston sont disposées sans jeu à l'intérieur des parties basses 64A et 66A des évidements 64 et 66 lorsque les deux parties de moule sont verrouillées l'une sur l'autre. Ceci permet en effet d'assurer l'étanchéité de la cavité du moule pour réaliser l'étape de soufflage finale. En préservant le jeu j lors de l'étape de retournement, on fait en sorte qu'un jeu fonctionnel soit ménagé entre les périphéries externes 34C et 36C et les parties basses des évidements 64 et 66 pour permettre effectivement le coulissement sans difficulté du piston dans le moule.

Pendant l'étape de retournement, le volume intérieur de l'enveloppe 12' diminue. Avantageusement, pour éviter une mise en pression trop importante de l'intérieur de l'enveloppe lors du retournement, ce qui conduirait cette enveloppe à épouser peu à peu les parois de la cavité et pourrait compliquer la manoeuvre de retournement, on raccorde l'espace intérieur de l'enveloppe à un conduit d'échappement d'air. Par exemple, ce conduit peut être constitué par le conduit 90 précédemment évoqué, une soupape d'échappement d'air commandée par le microprocesseur 30 pouvant être placée sur le conduit 56. On fait alors en sorte que l'échappement d'air soit suffisant pour éviter une mise en pression excessive, mais on régule le débit de l'air évacué pour maintenir sensiblement constante la pression à l'intérieur de l'enveloppe en évitant une dépression excessive qui pourrait nuire à la réussite du procédé.

Une variante consiste au contraire à ne pas procéder à l'échappement d'air lors de l'étape de retournement en utilisant la mise en pression de l'espace intérieur de l'enveloppe qui en résulte pour initier l'étape de soufflage, puisque cette mise en pression contribue à plaquer l'enveloppe contre les parois du moule. Si l'on choisit cette variante, il importe de régler très précisément la vitesse de déplacement du piston par rapport au débit d'air pour éviter que la mise en pression ne soit excessive et ne nuise au retournement.

On remarque que dans l'exemple représenté, le "plan de joint" 35 entre le piston de retournement et la cavité du moule se situe dans une partie médiane du rebord supérieur de l'objet que l'on fabrique (rebord qui, dans la position de soufflage, se trouve dirigé vers le bas). Ainsi, les parois des évidements 64 et 66 forment une portion extérieure du rebord de l'objet, tandis que la périphérie extérieure des parties 34 et 36 de piston forme une portion intérieure de ce rebord.

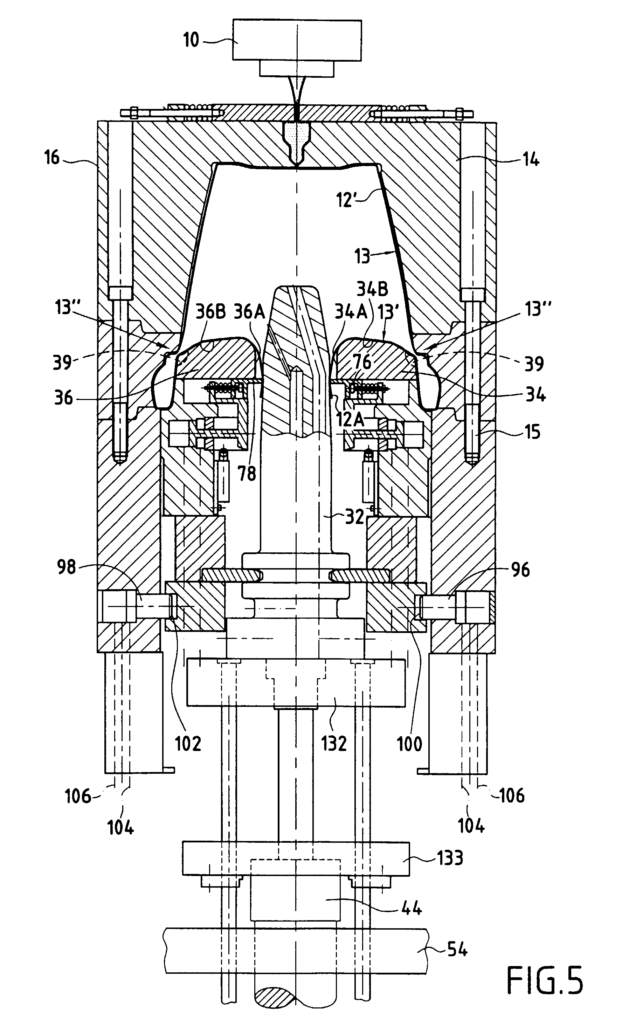

A l'issue de l'étape de retournement, on parvient dans la configuration représentée sur la figure 5, dans laquelle le piston de retournement (la canne de soufflage 32 et les parties 34 et 36) occupe sa position haute. Cette figure montre la situation presque à la fin de l'étape de soufflage, puisque le conduit 90 a été de nouveau utilisé pour injecter de l'air de manière à conférer à l'enveloppe sensiblement sa forme définitive et elle épouse pratiquement les parois de la cavité du moule. A l'issue du soufflage, elle sera plaquée contre les parois de la cavité délimitée entre les évidements 64 et 66 et les portions supérieures des parties 34 et 36 de piston, ces portions supérieures comprenant les extrémités supérieures 34B et 36B des parties de piston et une portion de leurs périphéries externes respectives. Jusqu'aux organes de serrage 76 et 78, l'enveloppe sera également plaquée contre les parois internes 34A et 36A des parties de piston 34 et 36.

Pour réaliser l'étape de soufflage final, le moule a été totalement refermé, c'est-à-dire que le jeu j précédemment évoqué a été supprimé. A cet effet, des moyens de verrouillage des deux parties du moule 14 et 16 l'une sur l'autre ont été utilisés. Ils sont avantageusement commandés de manière à ne pouvoir être mis en oeuvre que lorsque le piston de retournement occupe effectivement sa position haute à l'intérieur du moule. Par exemple, ces moyens de verrouillage comprennent des doigts de verrouillage et des cavités complémentaires de verrouillage qui ne parviennent en regard les uns des autres que lorsque le piston occupe sa position haute. Ainsi, dans l'exemple représenté, les doigts de verrouillage 96 et 98 occupent respectivement les parties de moule 14 et 16, et se trouvent dans la région des parties basses 64A et 66A des évidements 64 et 66, tandis que les cavités de verrouillage 100 et 102 dans lesquelles peuvent venir s'engager ces doigts équipent la périphérie latérale externe des parties de piston 34 et 36 dans la région des extrémités inférieures de ces dernières.

Comme on le voit sur la figure 5, c'est seulement lorsque les cavités sont parvenues dans le plan horizontal des doigts de verrouillage que ceux-ci peuvent s'engager dans celles-là. Pour effectivement réaliser le verrouillage, les doigts de verrouillage peuvent être réalisés sous la forme de vérins, par exemple des vérins hydrauliques, qui coulissent dans des chambres raccordées à des conduits d'alimentation et d'échappement de fluide 104 et 106. Pour actionner les doigts 96 et 98 dans le sens du verrouillage, les conduits 106 sont alimentés en fluide sous pression, tandis que les conduits 104 permettent l'échappement de fluide. La circulation de fluide se fait en sens inverse pour réaliser le déverrouillage en dégageant les doigts des cavités 100 et 102.

On remarque que les extrémités libres des doigts 96 et 98 font en permanence légèrement saillie vers l'axe A sur les parties basses 64A et 66A des évidements 64 et 66. Les périphéries externes des parties 34 et 36 de piston présentent des rainures, respectivement 108 et 110 dans lesquelles pénètrent les extrémités libres des doigts. Ces rainures sont évidemment moins profondes que les cavités 100 et 102 précédemment évoquées. De cette manière, les extrémités libres des doigts coopèrent en butée avec les extrémités supérieures des rainures 108 et 110 pour déterminer la position basse des parties 34 et 36 de piston, position représentée par exemple sur la figure 2.

De manière complémentaire ou alternative, la position basse des parties 34 et 36 de piston peut être définie lorsque ces parties de piston, par exemple par leurs extrémités inférieures, reposent en butée sur des saillies 109 et 111 des parties de moule.

La position basse de la canne de soufflage 32 est, quant à elle, obtenue lorsque sa base 132 repose sur le support fixe (table) 133.

Ces positions basses se correspondent pour que les doigts 38 et 40 soient dans le même plan que la gorge 42.

La partie de l'enveloppe 12' retournée sur elle-même sert à former un retour dans la région du bord libre de l'objet que l'on fabrique. Ainsi, l'enveloppe 12' présente une partie non retournée 13 et une partie retournée 13'. Le retour de l'objet est formé par une portion sensiblement verticale de la partie retournée 13'. Comme on le voit sur la figure 5, les parties 13 et 13' sont soudées l'une sur l'autre dans une région 13". En fait, à la fin de l'étape de retournement, on réalise cette soudure de la partie retournée de l'enveloppe à la partie non retournée. Ceci est simplement dû au fait que la portion soudée 13" correspond à une circonférence de contact entre les parties 13 et 13" puisque, dans cette région, les périphéries externes des parties de piston 34 et 36 sont extrêmement proches des parois des cavités 64 et 66 et viennent presque au contact de ces dernières, sans toutefois écraser l'enveloppe.

La présence de cette zone de soudure 13" est particulièrement intéressante puisque, une fois l'objet démoulé, il suffira de découper la partie retournée 13' juste en dessous de la zone de soudure 13" pour obtenir un objet dont le retour est fermé. Si cet objet est destiné à contenir un produit tel que de la terre, on évite ainsi que ce produit ne vienne se placer sous le retour du bord libre de l'objet, par exemple lorsqu'on le renverse pour le vider.

Malgré la présence de la ligne de soudure, il est avantageux de s'assurer que, lors du soufflage, la pression d'air sous le retour soit suffisante pour effectivement correctement conformer la zone du bord libre de l'objet. Pour ce faire, tout en soudant la partie retournée 13' de l'enveloppe à la partie 13, on ménage au moins un passage d'air entre lesdites parties retournées et non retournée. Ce passage d'air est tout simplement réalisé en dotant la périphérie externe des parties 34 et 36 de piston d'une ou plusieurs encoches 39, précisément dans la région dans laquelle le bord du piston est normalement le plus proche de la paroi des évidements 64 et 66. Dans cette zone, la partie retournée de l'enveloppe viendra se placer contre le fond de l'encoche et ne viendra pas au contact de la partie non retournée.

On a indiqué précédemment que les organes de serrage 76 et 78 étaient montés sur des supports élastiques, grâce aux tiges 80 et aux ressorts 82. Cette conformation présente un intérêt particulier puisque les moyens élastiques sollicitent les organes de serrage contre la canne de soufflage de manière à effectivement maintenir l'extrémité inférieure de l'enveloppe pendant les étapes de pré-soufflage et de retournement, durant lesquelles le jeu j entre les deux parties de moule est préservé. Le montage des organes de serrage sur les moyens élastiques permet d'assurer le verrouillage des deux parties de moule, c'est-à-dire la suppression du jeu j par compression des ressorts 82.

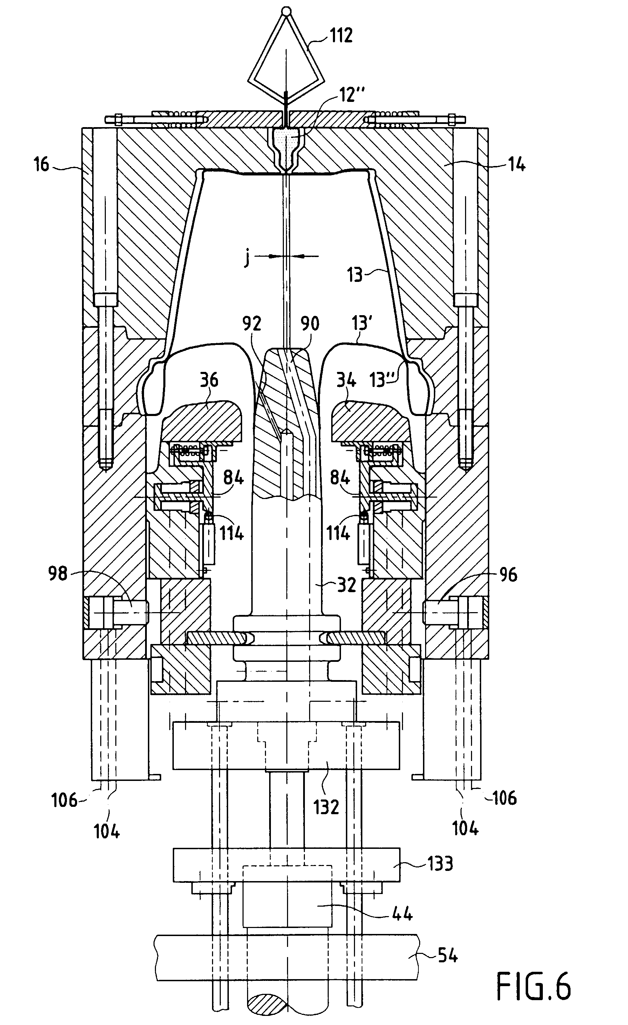

La figure 6 montre une étape finale du procédé, à l'issue de laquelle on est prêt à démouler l'objet formé dans le moule. Pour réaliser cette étape, on descend à l'intérieur de la cavité du moule l'ensemble constitué par la canne de soufflage 32 et les deux parties de moule 34 et 36, et l'on saisit, par exemple à l'aide d'une pince de préhension 112, l'objet qui vient d'être fabriqué, avant d'écarter les deux parties de moule l'une de l'autre pour libérer effectivement cet objet et pouvoir le dégager de la zone de fabrication. Par exemple, la pince 112 vient s'accrocher dans l'extrémité de la paraison située immédiatement au-dessus des doigts de pincement 68 et 70. Evidemment, le déplacement de cette pince et son actionnement peuvent également être gérés à l'aide du microprocesseur 30.

Le moule peut alors être déplacé sur le côté pour être écarté de la sortie de l'extrudeuse et permettre l'approche de la pince 112.

Pour pouvoir effectivement faire descendre l'ensemble constitué par la canne de soufflage et les deux parties de piston à l'intérieur du moule, il faut préalablement avoir dégagé les doigts de verrouillage 96 et 98 des cavités 100 et 102. De plus, pour permettre effectivement le coulissement de la périphérie externe des parties de piston par rapport aux parties basses 64A et 66A des évidements 64 et 66, on a très légèrement écarté les deux parties de moule jusqu'à par exemple retrouver le jeu j précédemment évoqué.

Par ailleurs, lors de ce déplacement vers le bas, il est évidemment préférable que les organes de serrage 76 et 78 aient cessé leur action de serrage sur l'extrémité inférieure 12A de la paraison pour éviter d'entraîner cette dernière vers le bas. Il faut donc ne commencer la descente du piston dans la cavité du moule que lorsque l'on est certain que le serrage a cessé. Pour ce faire, on sollicite les pistons 84 qui portent les organes de serrage 76 et 78 dans le sens de leur rétractation dans la paroi des parties de piston, en alimentant les conduits 88 en fluide sous pression. On ne commence le mouvement de descente du piston de retournement que lorsque ces pistons 84 de support ont atteint leur position de rétractation. Pour s'en assurer, des capteurs de position 114 sont avantageusement disposés sur le trajet de ces pistons, il peut s'agir de capteurs optiques ou, comme dans l'exemple représenté, de capteurs de contact dont l'extrémité supérieure coopère avec l'extrémité inférieure des pistons 84. Lorsqu'ils détectent effectivement la présence des pistons 84, les détecteurs 114 émettent un signal qui est reçu par le micro-processeur 30 et lui permet de déclencher la descente du piston de retournement dans la cavité du moule.

Il faut enfin noter que les conduits secondaires de soufflage d'air 94 et 92 précédemment évoqués sont avantageusement utilisés à la fin de l'étape de soufflage, juste avant le démoulage. On peut en effet injecter de l'air froid dans ces conduits par le conduit 58 et réaliser ainsi le refroidissement intérieur de la pièce qui vient d'être moulée pour assurer la stabilisation de sa forme lors du démoulage. Pour balayer tout l'espace intérieur de la pièce, il est avantageux que les conduits secondaires 92 soient, comme on l'a indiqué précédemment, dirigés sur une portion tronconique de la tête de soufflage. Ils peuvent continuer de souffler de l'air froid pendant tout le mouvement de descente du piston de retournement. Après le démoulage, on découpe la partie retournée 13' juste en dessous de la zone de soudure 13" (c'est-à-dire juste au-dessus de cette zone 13" dans la position représentée sur la figure 6), et l'on découpe la partie inutilisée 12" de la paraison 12 sous le fond de l'objet fabriqué.

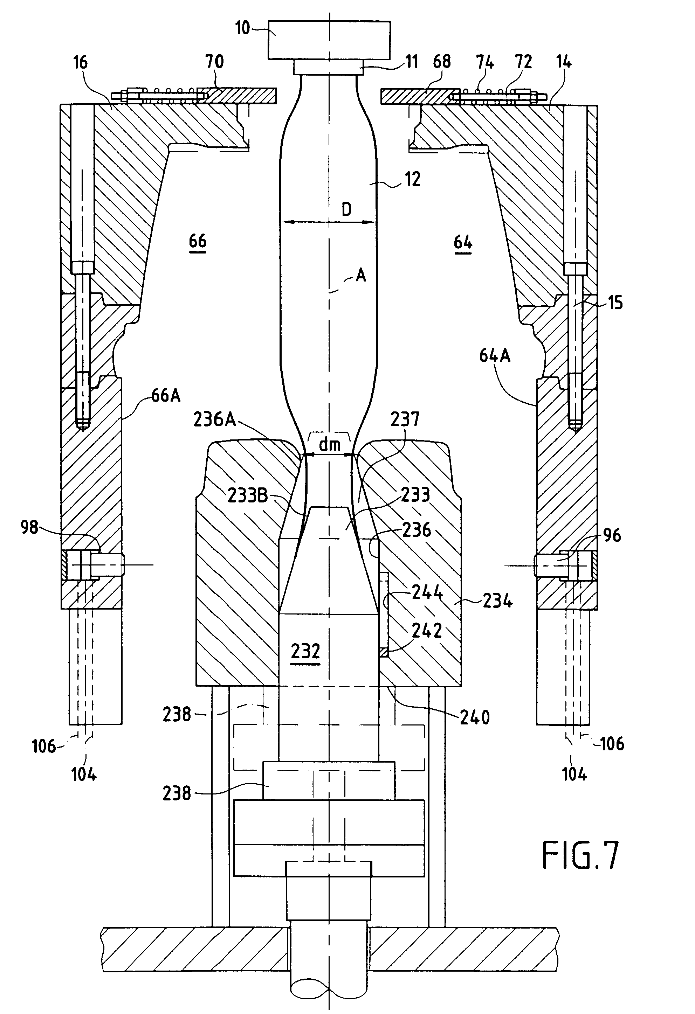

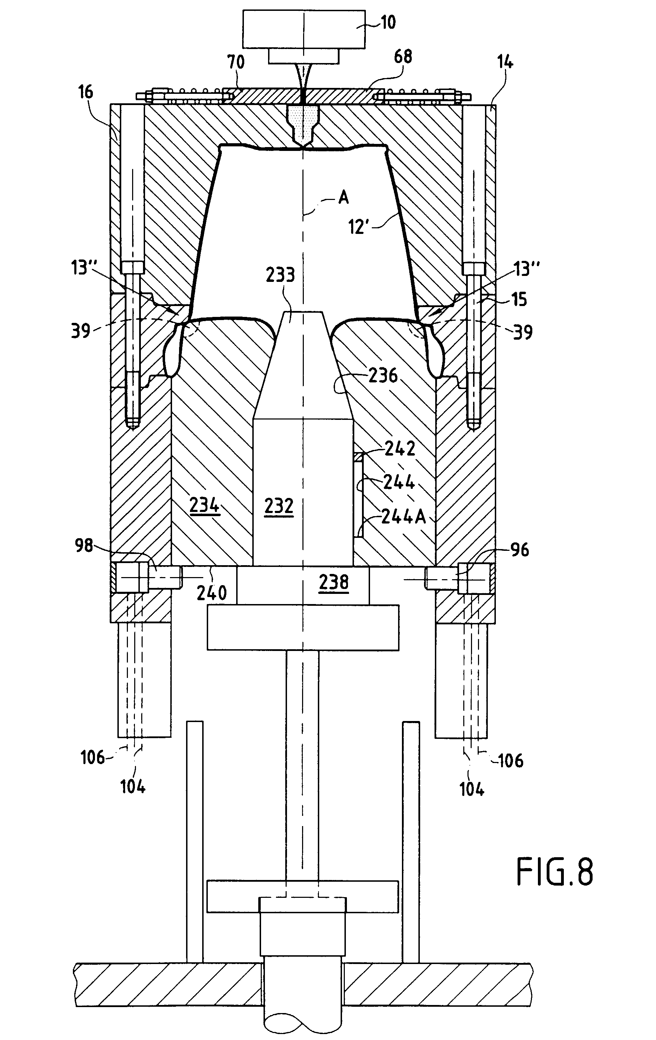

Sur les figures 7 et 8, les éléments inchangés par rapport aux figures 1 à 6 sont affectés des mêmes références que sur ces figures.

La variante des figures 7 et 8 diffère essentiellement de celle des figures précédentes par la conformation du piston de retournement. En effet, celui-ci comprend une partie de piston 234 ayant globalement la forme d'un cylindre évidé axialement en son centre. La canne de soufflage 232 est disposée dans l'évidement axial 236 de cette partie de piston. La forme de ladite partie est globalement la même que celle que définissent les parties 34 et 36 de piston des figures précédentes lorsqu'elles occupent leur position de rapprochement maximum.

La tête 233 de la canne de soufflage présente un contour tronconique 233B, dont le diamètre va en diminuant vers le haut. La paroi de l'évidement 236 présente quant à elle une portion terminale supérieure 236A également tronconique, dont le diamètre va également en diminuant vers le haut.

Sur la figure 7, la canne 232 occupe sa position basse, dans laquelle un espace annulaire 237 permettant l'insertion de l'extrémité inférieure de la paraison est ménagé entre les zones 233B et 236A de la tête 233 et de l'évidement 236. Il faut noter que le diamètre minimum dm de la paroi 236A est supérieur au diamètre que présente la paraison à son extrémité inférieure. Il n'est toutefois pas toujours nécessaire que ce diamètre dm soit supérieur au diamètre courant D de la paraison puisque, sous l'effet de la pesanteur et de sa vitesse d'introduction dans le moule celle-ci présente généralement un diamètre à son extrémité inférieure qui est plus petit que son diamètre courant.

Une fois l'extrémité inférieure de la paraison disposée dans l'espace annulaire 237, la canne de soufflage monte dans l'évidement 236 pour parvenir dans sa position haute illustrée en traits interrompus mixtes sur la figure 7, dans laquelle elle serre l'extrémité inférieure de la paraison contre la paroi de l'évidement 236.

Dans cette situation, on rapproche les deux parties de moule jusqu'à les amener dans la même position que celle que montre la figure 3 pour la première variante, pour réaliser l'étape de pré-soufflage.

Pour réaliser l'étape de retournement, la canne de soufflage est apte à entraîner avec elle la partie de piston 234 lorsqu'elle se déplace davantage vers le haut. Pour ce faire, elle présente par exemple un épaulement 238 apte à coopérer en butée contre l'extrémité inférieure 240 de la partie de piston 234.

Le soufflage est réalisé comme indiqué en référence aux figures précédentes pour la première variante.

La figure 8 montre la situation à la fin de l'étape de soufflage, la canne 232 et la partie de piston 234 occupent donc encore leur position haute.

Les doigts 96 et 98 précédemment évoqués ou un système équivalent ne permettent la fermeture complète du moule pour le soufflage que lorsque l'ensemble du piston a atteint sa position haute (ces doigts s'engagent par exemple sous l'extrémité inférieure 240 de la partie de piston 234).

Pour le démoulage, après avoir déverrouillé les doigts 96 et 98, on descend la canne 232 à l'intérieur de l'évidement 236 de manière à libérer l'extrémité inférieure de la paraison. Ensuite, après avoir éventuellement entrouvert le moule pour faciliter le coulissement de la partie de piston 234, on descend l'ensemble constitué par la canne 232 et par cette partie de piston 234 par rapport aux parties basses 64A et 66A des évidements 64 et 66 des parties de moule, jusqu'à ce que cet ensemble retrouve sa position basse initiale.

Un système est prévu pour faire en sorte que la canne 232 entraîne avec elle la partie de piston 234 lorsqu'elle redescend. Ainsi, par exemple, la périphérie axiale externe de cette canne (qui pour simplifier n'est représentée qu'en vue extérieure) est pourvue d'un taquet 242, disposé en saillie et engagé dans une rainure longitudinale 244 de la paroi de l'évidement 236. La longueur de cette rainure permet le déplacement de la canne dans la partie de piston 234 comme précédemment évoqué. Lorsque, à partir de la position de la figure 8, la canne est déplacée vers le bas, le taquet 242 vient en butée contre l'extrémité inférieure 244A de la rainure 244, ce qui permet l'entraînement vers le bas de la partie de piston 234.

Le moule est ensuite ouvert et l'objet moulé en est extrait.

## Revendications

1. Procédé de fabrication d'un objet en matière plastique formant contenant, dans lequel on réalise une paraison (12) en matière plastique, on introduit cette paraison dans un moule de soufflage ayant au moins deux parties (14, 16) susceptibles d'être déplacées l'une par rapport à l'autre pour ouvrir ou fermer le moule, on réalise une étape de soufflage dans ce moule et on réalise une étape de retournement en déplaçant un piston de retournement (34, 36; 234) à l'intérieur du moule pour obtenir un objet formant contenant ayant un bord libre qui présente un retour (13'),
caractérisé en ce que l'on introduit la paraison (12) dans le moule ouvert en posant l'extrémité inférieure (12A) de ladite paraison sur la tête (33 ; 233) d'une canne de soufflage (32 ; 232) située entre les deux parties de moule (14, 16) écartées l'une de l'autre, en ce que l'on rapproche les deux parties du moule pour au moins sensiblement fermer ce moule, on pince la paraison dans la région supérieure du moule et on serre l'extrémité inférieure de ladite paraison contre la canne de soufflage (32; 232) dans la région inférieure du moule, en ce que, dans cette situation, on réalise une étape de pré-soufflage pour obtenir une enveloppe pré-soufflée (12') dont au moins une partie de la périphérie se trouve au voisinage des parois (64, 66) du moule sans être plaquée contre ces parois, ladite enveloppe pré-soufflée ayant une partie d'extrémité inférieure (12'A) qui se trouve au voisinage de l'extrémité supérieure (34B, 36B) du piston de retournement (34, 36; 234) tout en étant distante des parois du moule, en ce que l'on réalise l'étape de retournement en déplaçant vers le haut la canne de soufflage (32; 232) avec le piston (34, 36; 234) pour retourner sur elle-même la partie d'extrémité inférieure (12'A) de l'enveloppe pré-soufflée (12'), et en ce que, à la suite de l'étape de retournement, on réalise une étape de soufflage final pour obtenir une enveloppe soufflée ayant la forme de l'objet formant contenant.

2. Procédé selon la revendication 1, caractérisé en ce que, pendant l'étape de retournement, on raccorde l'espace intérieur de l'enveloppe à un conduit d'échappement d'air (90).

3. Procédé selon la revendication 1 ou 2, caractérisé en ce que, pendant l'étape de pré-soufflage, on laisse le moule (14, 16) dans un état non verrouillé, un interstice (j) d'échappement d'air étant ménagé entre les parties du moule.

4. Procédé selon l'une quelconque des revendications 1 à 3, caractérisé en ce que l'on utilise un piston de retournement ayant deux parties (34, 36) disposées autour de la canne de soufflage (32) et déplaçables l'une par rapport à l'autre, en ce que lors de l'introduction de la paraison dans le moule, on maintient les deux parties du piston écartées en ménageant ainsi un espace sensiblement annulaire (37) entre la canne (32) et lesdites parties du piston (34, 36) et l'on pose l'extrémité inférieure (12A) de la paraison sur la tête (33) de la canne de soufflage (32) en insérant ladite extrémité inférieure dans ledit espace (37) et en ce que l'on rapproche ensuite les deux parties du piston (34, 36) pour les appliquer contre la canne de soufflage (32) et serrer ainsi l'extrémité inférieure de la paraison contre ladite canne.

5. Procédé selon l'une quelconque des revendications 1 à 3, caractérisé en ce que l'on utilise un piston de retournement comprenant une partie de piston (234) ayant la forme d'un cylindre évidé, la canne de soufflage (232) étant disposée dans l'évidement (236) de ladite partie et au moins l'un des deux éléments constitués par la tête (233) de la canne de soufflage et par ledit évidement présentant des dimensions diamétrales allant en diminuant vers le haut (233B, 236A), en ce que, lors de l'introduction de la paraison (12) dans le moule, on maintient la canne de soufflage (232) dans une position basse dans laquelle un espace sensiblement annulaire (237) est ménagé entre la tête (233) de ladite canne (232) et la paroi dudit évidement (236) et l'on pose l'extrémité inférieure de la paraison sur la tête de la canne de soufflage en insérant ladite extrémité inférieure dans ledit espace (237) et en ce que l'on remonte ensuite la canne de soufflage (232) dans l'évidement (236) de la partie de piston (234) pour serrer l'extrémité inférieure de la paraison entre la paroi de l'évidement et la tête de la canne.

6. Procédé selon l'une quelconque des revendications 1 à 5, caractérisé en ce que, à la fin de l'étape de retournement, on soude la partie retournée (13') de l'enveloppe (12') à la partie non retournée (13) de ladite enveloppe.

7. Procédé selon la revendication 6, caractérisé en ce que, tout en soudant la partie retournée (13') de l'enveloppe (12') à la partie non retournée (13) de ladite enveloppe, on ménage au moins un passage d'air entre lesdites parties retournée et non retournée (13', 13).

8. Dispositif pour fabriquer un objet en matière plastique formant contenant, le dispositif comportant des moyens (10) pour réaliser une paraison (12) en matière plastique, un moule de soufflage ayant au moins deux parties (14, 16) susceptibles d'être déplacées l'une par rapport à l'autre pour ouvrir ou fermer le moule, des moyens (11) pour introduire la paraison dans le moule, une canne de soufflage (32 ; 232) et un piston de retournement (34, 36; 234) susceptible d'être déplacé à l'intérieur du moule pour former un retour dans la région du bord libre de l'objet formant contenant,
caractérisé en ce que la canne de soufflage (32; 232) est disposée sous les moyens (11) pour introduire la paraison dans le moule (14, 16) et se trouve entre les deux parties du moule, la canne de soufflage présentant une tête de soufflage (33; 233) apte à recevoir l'extrémité inférieure (12A) de la paraison (12) lorsque le moule est ouvert, en ce qu'il comporte des moyens (68, 70) pour pincer la paraison dans la région supérieure du moule et des moyens (76, 78; 233B, 236A) pour serrer l'extrémité inférieure (12A) de ladite paraison contre la canne de soufflage (32; 232) dans la région inférieure du moule, en ce que la canne de soufflage (32; 232) est susceptible d'être utilisée pour réaliser une étape de pré-soufflage de manière à obtenir une enveloppe pré-soufflée (12') dont au moins une partie de la périphérie se trouve au voisinage des parois du moule (64, 66) au moins sensiblement fermé sans être plaquée contre ces parois, ladite enveloppe ayant une partie d'extrémité inférieure (12'A) qui se trouve au voisinage de l'extrémité supérieure (34B, 36B) du piston de retournement (34, 36; 234) tout en étant distante des parois du moule, en ce que la canne de soufflage (32 ; 232) est susceptible d'être déplacée vers le haut avec le piston pour retourner sur elle-même la partie d'extrémité inférieure (12'A) de l'enveloppe pré-soufflée (12') et en ce que la canne de soufflage est susceptible d'être utilisée pour réaliser une étape de soufflage final de manière à obtenir une enveloppe soufflée ayant la forme de l'objet formant contenant.

9. Dispositif selon la revendication 8, caractérisé en ce qu'il comporte des moyens (90, 56) pour raccorder l'espace intérieur de l'enveloppe pré-soufflée (12') à un conduit d'échappement d'air.

10. Dispositif selon la revendication 8 ou 9, caractérisé en ce qu'il comporte des moyens de commande de la fermeture du moule, réglés pour ne verrouiller l'une par rapport à l'autre les deux parties de moule (14, 16) qu'à la fin de l'étape de pré-soufflage.

11. Dispositif selon l'une quelconque des revendications 8 à 10, caractérisé en ce que le piston de retournement comporte deux parties (34, 36) disposées autour de la canne de soufflage (32), ces deux parties étant susceptibles d'être écartées pour ménager autour de la canne de soufflage un espace sensiblement annulaire (37) apte à recevoir l'extrémité inférieure (12A) de la paraison (12) lorsque celle-ci est posée sur la tête (33) de la canne de soufflage et d'être rapprochées pour serrer l'extrémité inférieure de la paraison contre ladite canne.

12. Dispositif selon la revendication 11, caractérisé en ce que les deux parties (34, 36) du piston de retournement comportent chacune un organe de serrage (76, 78), ces organes de serrage (76A, 78A) formant, considérés ensemble, une couronne de serrage qui fait saillie vers la canne de soufflage (32) pour serrer l'extrémité inférieure (12A) de la paraison (12) contre ladite canne.

13. Dispositif selon la revendication 12, caractérisé en ce que les organes de serrage comportent des moyens (80, 82) pour les solliciter élastiquement en saillie vers la canne de soufflage.

14. Dispositif selon l'une quelconque des revendications 8 à 10, caractérisé en ce que le piston de retournement comporte une partie de piston (234) ayant la forme d'un cylindre évidé, la canne de soufflage (232) étant disposée dans l'évidement (236) de ladite partie et au moins l'un des deux éléments constitués par la tête (233) de la canne de soufflage et par ledit évidement présentant des dimensions diamétrales allant en diminuant vers le haut (233B, 236A), en ce que la canne de soufflage (232) est susceptible d'occuper une position basse dans laquelle un espace annulaire (237) apte à recevoir l'extrémité inférieure de la paraison (12) lorsque celle-ci est posée sur la tête (233) de la canne de soufflage est ménagé entre ladite tête et la paroi de l'évidement de la partie de piston, et d'occuper une position haute dans ledit évidement (236) pour serrer l'extrémité inférieure de la paraison entre la paroi de cet évidement et ladite tête de la canne.

15. Dispositif selon l'une quelconque des revendications 8 à 14, caractérisé en ce qu'il comporte des moyens (38, 40, 42; 238, 240, 242, 244) pour solidariser en déplacement vertical le piston de retournement (34, 36 ; 234) et la canne de soufflage (32 ; 232).

16. Dispositif selon l'une quelconque des revendications 8 à 15, caractérisé en ce qu'il comporte des moyens (96, 98, 100, 102) pour verrouiller les deux parties du moule (14, 16) l'une sur l'autre susceptibles d'être mis en oeuvre seulement lorsque le piston de retournement et la canne de soufflage (32, 34, 36; 232, 234) occupent une position haute à l'intérieur du moule.
